# EUROPÄISCHE PATENTSCHRIFT

(11) **EP 1 840 910 B1**
(45) Veröffentlichungstag und Bekanntmachung des Hinweises auf die Patenterteilung: **27.01.2010**
(21) Anmeldenummer: 07102116.6
(22) Anmeldetag: 12.02.2007
(51) Int. Cl.: H01F 27/00, H02K 11/00

(54) **Magnetische Abschirmung im Stirnbereich des Stators eines Drehstromgenerators**
Magnetic schield in the end area of the stator of a three-pnase generator
Ecran magnétique au côté frontal d'un stator d'alternateur à courant triphasé

(30) Priorität: 31.03.2006 CH 5442006
(43) Veröffentlichungstag der Anmeldung: 03.10.2007
(73) Patentinhaber: Alstom Technology Ltd, 5400 Baden (CH)
(72) Erfinder: Drubel, Oliver, 91257, Pegnitz (DE); Joho, Reinhard, 5022, Rombach (CH); Arend, Peter, 79618, Rheinfelden (DE)

(56) Entgegenhaltungen:
- US-A- 4 054 809
- US-A- 4 705 983
- US-A1- 2002 079 875
- US-B1- 6 373 921
- PATENT ABSTRACTS OF JAPAN Bd. 018, Nr. 646 (E-1641), 8. Dezember 1994 (1994-12-08) & JP 06 252587 A (MITSUBISHI MATERIALS CORP), 9. September 1994 (1994-09-09)

## Beschreibung

### Technisches Gebiet

Die Erfindung betrifft einen Drehstromgenerator mit magnetischer Abschirmung für Bauteile an einem Stator desselben.

### Stand der Technik

Eine grosse Quelle von Zusatzverlusten bei Drehstromgeneratoren tritt in metallischen Konstruktionsteilen im Stirnbereich des Stators auf. Parasitäre Magnetfelder, herrührend von Strömen in den Wickelköpfen von Stator- und Rotorwicklung, erzeugen in diesen Teilen Wirbelströme, welche Zusatzverluste erzeugen. Diese Zusatzverluste machen in der Regel etwa 0,05% bis 0,1% des Wirkungsgrades eines Turbogenerators aus. Daher ist es ein grosses Bestreben in diesem Bereich der Technik, diese Zusatzverluste so weit als möglich zu reduzieren. Ausserdem sollen gleichzeitig Wärmestaus vermieden werden, die ebenfalls in diesem Bereich auftreten. Mehrere dieser Verluste gehen auf dreidimensionale Feldeffekte in der Gehäuse- oder Pressplattenregion zurück. Dabei tritt der magnetische Fluss in die Gehäusewände oder die Pressplatte ein.

Die übliche Abschirmung von energiereichen magnetischen Feldern oder von elektromagnetischen Wellen beruht auf der Induktion von starken Wirbelströmen in metallischen Hüllen, deren Felder den induzierenden Störfeldern entgegenwirken, der so genannten Wirbelstromabschirmung.

Durch Wirbelströme besonders beansprucht wird die Pressplatte, welche den Statorkern abschließt und axial gepresst hält. Ferner können auch Gehäuseteile, insbesondere leiternahe Wände und Rippen gefährdet sein.

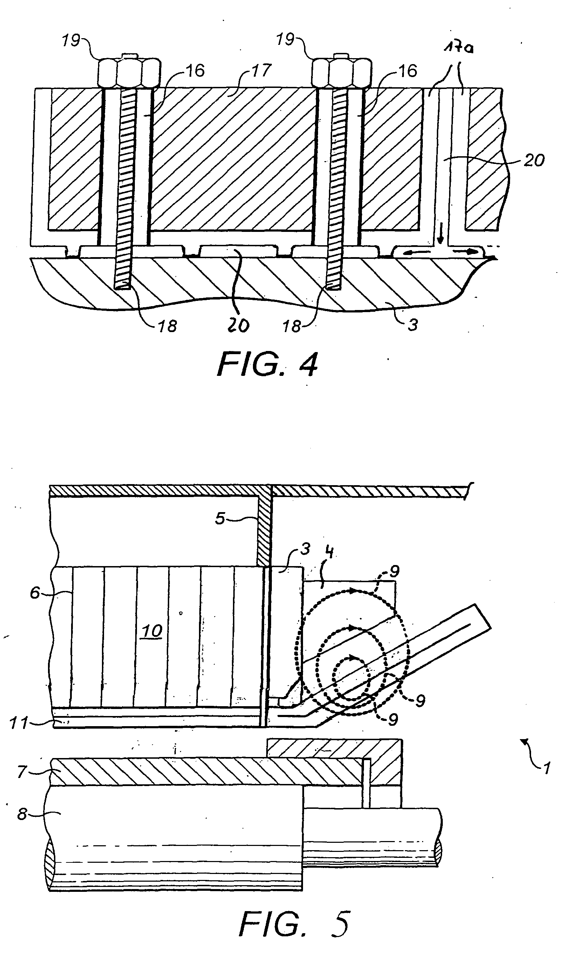

Ein konventioneller Drehstromgenerator 1 vom Stand der Technik ist ausschnittsweise in einer geschnittenen Darstellung in Figur 5 gezeigt. Darin ist schematisch der Rotorkörper 8 dargestellt, in welchem die Rotorwicklungen 7 angeordnet sind. Der Rotorkörper 8 dreht sich in einem Statorkern 6, der stirnseitig mit Pressplatten 3 aus massivem Metall, z.B. unmagnetischem Stahl, abschliesst. Im Statorkern 6 liegt die Statorwicklung 11, welche im Stirnbereich in einem Statorwickelkopf endet. Bei dem bekannten Aufbau entstehen im Stirnbereich Streufelder, die in der Figur durch entsprechende Magnetfeldlinien 9 dargestellt sind. Diese Felder dringen beim Stand der Technik mit einer gewissen Eindringtiefe in die Pressplatten 3 und die Gehäusewände 5 ein, was zu Wirbelströmen führt.

Wirbelströme können erhebliche Energieverluste, die so genannten Wirbelstromverluste verursachen, bei denen dem Magnetfeld Energie entzogen und in Wärme umgewandelt wird. Um die Verluste gering zu halten, werden vor den gefährdeten Teilen elektrisch gut leitende Metallplatten (z.B. aus Cu) angeordnet, in welchen die Wirbelströme verlustarm fliessen können (Flussabweisung). Ferner werden, um diese Verluste gering zu halten, leitende Körper ferromagnetisch ausgeführt und möglichst weitgehend unterteilt, z.B. durch getreppte Strukturen aus Dynamoblech (Flussabsaugung).

Aus der US 2002/0079875 A1 ist ein Generator bekannt, der Vorrichtungen zur magnetischen Flussabsaugung aufweist. Die ringförmig ausgebildeten Vorrichtungen zur magnetischen Flussabsaugung sind am Innenumfang des Stators in den beiden Endbereichen angeordnet. Gemäss einer Ausführungsform können die Vorrichtungen zur magnetischen Flussabsaugung aus magnetisch isotropem Material, beispielsweise einer Pulver-Eisen-Zusammensetzung, hergestellt sein, wobei das Material einen hohen elektrischen Widerstand aufweist, thermisch leitend ist und eine hohe isotrope Permeabilität aufweist. Allerdings wird hier nur zweidimensional, axialer magnetischer Fluss abgelenkt.

JP 06252587 offenbart ein zur Abschirmung von Magnetfeldern geeignetes Material, welches sich durch einen reduzierten magnetischen Widerstand auszeichnet und welches auch starken Magnetfeldern ausgesetzt werden kann, ohne dass es zu einer erheblichen Erwärmung kommt. Ein Material mit derartigen Eigenschaften wird bereitgestellt durch Einlagerung einer Mischung unterschiedlich strukturierter und dimensionierter weichmagnetischer Partikel in eine Harzmatrix.

### Darstellung der Erfindung

Der Erfindung liegt die Aufgabe zugrunde, einen Drehstromgenerator mit einer flächendeckenden Abschirmung für Bauteile am Stator zur Verfügung zu stellen, in welchem die Zusatzverluste verringert und Wärmestaus verhindert sind. Ferner soll eine möglichst einfach und kostengünstig herzustellende und zu montierende Lösung geschaffen werden, die auch bei bestehenden Drehstromgeneratoren einfach nachgerüstet werden kann. Dabei sollen dreidimensionale Finite Elemente Design Verfahren zur Optimierung des Magnetfelds genutzt werden können.

Erfindungsgemäss wird diese Aufgabe durch einen Drehstromgenerator mit den Merkmalen des Patentanspruchs 1 gelöst. Vorteilhafte Ausführungsformen und Weiterbildungen dieser Erfindung sind in den abhängigen Ansprüchen beschrieben.

Der erfindungsgemässe Drehstromgenerator mit einem Gehäuse, einem einen Statorkern mit einer Statorwicklung aufweisenden Stator, wobei stirnseitig am Statorkern zumindest eine Pressplatte angeordnet ist und einer magnetischen Abschirmung aus einem magnetisch permeablen Verbundmaterial ist dadurch gekennzeichnet, dass die Abschirmung aus dreidimensional geformten Modulen eines Verbundmaterials aus magnetisch permeablen, von einer Isolierschicht umschlossenen Verbund-Partikeln gebildet ist, die in Ausnehmungen der zumindest einen stirnseitigen Pressplatte eingefügt sind oder radial über, radial unter oder axial vor der stirnseitigen Pressplatte angeordnet sind. Das Verbund-Material weist dabei isotrope magnetische Eigenschaften auf und kann hervorragend zur Abdeckung von komplexen geometrischen Strukturen verwendet werden.

Dabei ist die Abschirmung vorteilhaft auf wicklungsnahe Bereiche des Gehäuses aufgebracht.

Hierdurch werden die Nachteile des Standes der Technik vermieden und eine Abschirmung für Gehäusebauteile und/oder Gehäusedurchführungen an einem Stator eines Drehstromgenerators zur Verfügung gestellt, welche die Zusatzverluste verringert und Wärmestaus verhindert. Ferner wird eine einfach und kostengünstig herzustellende und zu montierende Lösung geschaffen, die auch bei bestehenden Drehstromgeneratoren einfach nachgerüstet werden kann. Ausserdem können dreidimensionale Finite Elemente Design Verfahren zur optimierten Führung des Magnetfelds genutzt werden.

Die hierdurch erreichbare Flussabsaugung und Flussführung ergibt wesentlich kleinere Verluste als die Flussabweisung, insbesondere durch Alu- oder Kupferabschirmungen, da das Magnetfeld nicht in elektrisch gut leitfähiges Material (Pressplatten, Abschirmungen) eindringt und dadurch keine Wirbelströme generiert werden. Gleichzeitig erhöht sich die Stirnstreuung durch Verwendung von hochpermeablem Material um bis zu 50%, was zu einer erwünschten Vergrösserung der subtransienten Reaktanz führt.

Das bevorzugt eingesetzte Verbund-Material (Soft Magnetic Composite - SMC) weist magnetisch permeable, von einer Isolierschicht umschlossene Partikel auf. Derartige Verbund-Partikel, die im wesentlichen aus Eisenpulver mit einer isolierenden Kunststoffummantelung bestehen, sind im Handel erhältlich. Bei der geforderten 3D-Feldführung sind die Wirbelstromverluste bei Verwendung derartiger SMC's deutlich geringer als bei Verwendung von laminierten Blechen. Die Partikelgrösse beträgt dabei wenige Mikrometer, beispielsweise 100 µm.

Dabei sieht eine besonders vorteilhafte Weiterbildung vor, dass die Isolierschicht der Verbund-Partikel eine Dicke von wenigen Mikrometern, vorzugsweise 20 µm bis 40 µm, beispielsweise 30 µm aufweist. Die elektrisch isolierende Schicht ist dabei beispielsweise durch eine Phosphatierung der Oberfläche hergestellt.

Eine weitere vorteilhafte Ausführungsform der Erfindung sieht vor, dass die Abschirmungsmodule ein Trägermaterial aufweisen, in welchem die Verbund-Partikel aufgenommen sind. Ein solches Trägermaterial kann ein thermoplastischer Kunststoff sein, der die Partikel verbindet, wie beispielsweise Peracil® (Phenol-Kresol-Formaldehyd) oder Ultem® (Polyetherimid).
Derartige Abschirmungen können beispielsweise durch ein Pulver-Spritzgiess-Verfahren hergestellt werden. Hier wird ein Kunststoffmaterial als Trägermaterial verwendet. Aber auch Kunststoffharze evtl. in Verbindung mit Verstärkungsmaterialien können hier als Trägermaterial verwendet werden. Hierdurch lassen sich extrem leichte geometrisch komplexe Strukturen mit den gewünschten mechanischen, magnetischen und thermischen Eigenschaften erzeugen.

Die Module werden als Überzug bzw. Abdeckungen für bestehende Pressplatten verwendet und können z.B. rechteckförmige oder wabenförmige Module bilden, die ohne grossen Aufwand zwischen den Stützen für die Statorwicklung eingesetzt werden können. Auf diese Weise lassen sich bestehende Generatoren einfach nachrüsten und Zusatzverluste effektiv verringern.

Werden die Module in Ausnehmungen der stirnseitigen Pressplatten eingefügt, wird einerseits das Magnetfeld in gewünschter Weise beeinflusst aber auch die mechanische Befestigung des Abschirmungsmoduls auf der Pressplatte verbessert. Ausserdem kann das Abschirmungsmodul die Pressplatte zum Luftspalt hin umschliessen.

Das Einfügen in die Pressplatten kann beispielsweise durch Einschrauben, Anleimen, Eingießen oder Einpressen erfolgen, wobei Teile der Pressplatte punkt- oder linienweise zur Verankerung vorstehen können.

Alternativ zur Anordnung in Ausnehmungen der stirnseitigen Pressplatten kann die Abschirmung radial über, radial unter oder axial vor den Pressplatten angeordnet werden.

Grundsätzlich ist die Ausrüstung eines Drehstromgenerators mit Abschirmungmodulen für alle Bereiche des Statorkerns und des Generatorgehäuses anwendbar, welche von den Magnetfeldlinien des Stirnfeldes berührt werden. Weiter können die Abschirmungsmodule zwischen den Stützen bzw. oberhalb und unterhalb der Stützen der Statorwicklung angeordnet sein oder seitlich an den Stützen anliegen und damit den magnetischen Fluss von den unbedeckten Pressplattenbereichen unter den Stützen absaugen.

Eine weitere vorteilhafte Ausführungsform der erfindungsgemässen Abschirmung sieht vor, dass die Abschirmungsmodule als Schicht-Konstruktion aus Verbund-Partikeln und hoch leitfähigem Material hergestellt ist. Das hoch leitfähige Material kann vorzugsweise Kupfer sein, wobei die Verbund-Partikel auf der Seite der Feldeindringung, d.h. auf der Seite der Statorwicklung, auf das Kupfer gesintert oder galvanisch aufgebracht sind.

Schliesslich sieht eine vorteilhafte Ausbildungsform der Erfindung vor, dass die Pressplatten vollständig durch Abschirmung aus Verbund-Partikeln ersetzt sind. Dies ist durch die hervorragenden Festigkeitseigenschaften der Verbund-Partikel zusammen mit eventuellen Verstärkungen (z.B. eingemischten Glasfasern) und die Anwendung entsprechender dreidimensionaler Finite Elemente Design Verfahren möglich. Hierdurch lassen sich zusätzliche Einsparungen bei der Herstellung und Montage erzielen und die Leistung des Drehstromgenerators steigern.

Ein Verfahren zum Herstellen einer Abschirmung für Bauteile am Stator eines Drehstromgenerators, wobei die Abschirmungen als komplexe, nötigenfalls gekrümmte Bauteile bzw. Module ausgeführt sind, weist folgende Schritte auf:
- Erstellen einer Negativform des Bauteils bzw. Moduls;
- Einbringen von weichmagnetischen Verbund-Partikeln in die Form und Pressen unter Umgebungstemperatur;
- Tempern der gepressten Bauteile bzw. Module aus weichmagnetischen Verbund-Partikeln bei etwa 500°C.

Zudem können die Abschirmungen noch mit einem Rahmen aus faserverstärktem Kunststoff oder mit einem Rahmen aus unmagnetischem Stahl umspritzt bzw. umgossen werden.

Wegen der dünnen elektrischen Isolationsschicht ist ein Sintern der Verbund-Partikel nicht möglich. Daher wird zur Erstellung einer komplexen Geometrie ein kombiniertes Press- und Härtverfahren, letzteres bis zu einer Temperatur von 500°C vorgeschlagen. Bei Verwendung von wesentlichen geringeren Temperaturen verbleiben im Material unerwünschte Materialspannungen, die zu unerwünschten höheren Hystereseverlusten führen können. Eine kostenintensive Nachbearbeitung kann bei einem derartigen Einpressen in eine bleibende Form entfallen. Alternativ kann aber auch ein Block gepresst und die jeweilige dreidimensionale Struktur aus dem Vollen gefräst werden. Dies ist insbesondere dann von Vorteil, wenn keine grössere Stückzahl an gleichen Teilen hergestellt werden soll und sich daher die Erstellung einer Negativform nicht lohnt.

### Kurze Beschreibung der Zeichnungen

Weitere Vorteile der Erfindung werden nachstehend gemeinsam mit der Beschreibung eines bevorzugten Ausführungsbeispiels der Erfindung anhand der Figuren näher dargestellt. Es zeigen:

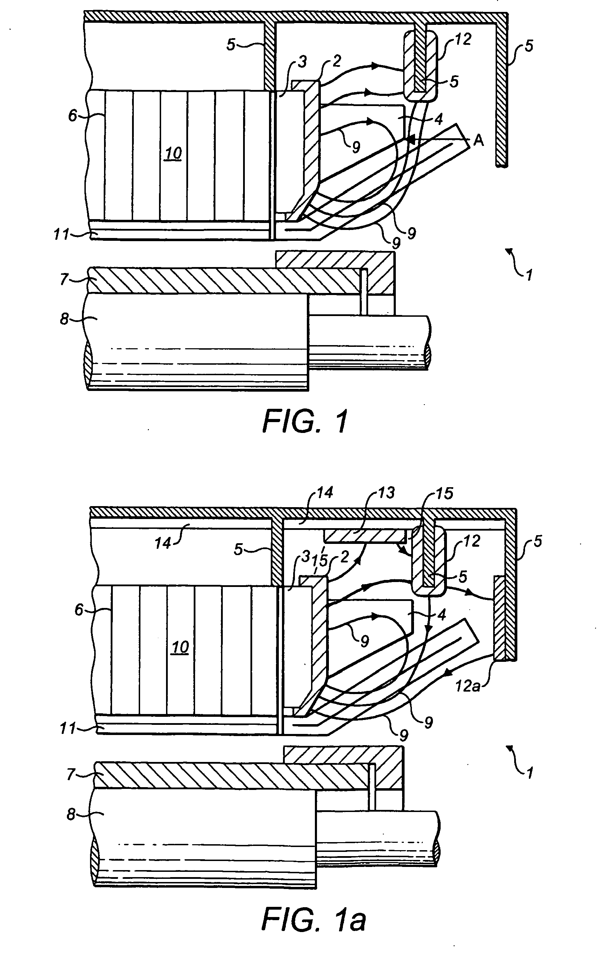

- Fig. 1: einen ausschnittsweise dargestellten Drehstromgenerator mit erfindungsgemäßer Abschirmung im Schnitt;
- Fig. 1 a: eine abgewandelte Ausführungsform eines Drehstromgenerators mit erfindungsgemäßer Abschirmung im Schnitt;
- Fig. 2: eine Teilansicht in Pfeilrichtung A aus Figur 1;
- Fig. 3: eine ausschnittsweise perspektivische Ansicht einer Plattenabschirmung;
- Fig. 4: einen schematischen Schnitt durch eine Platte gemäß Figur 3;
- Fig. 5: einen ausschnittsweise dargestellten Drehstromgenerator vom Stand der Technik im Schnitt.

Die Darstellung in den beigefügten Figuren erfolgt beispielhaft schematisch. In den Figuren sind jeweils gleiche oder ähnliche Bauteile mit gleichen Bezugszeichen versehen. Ferner sind nur die für das Verständnis der Erfindung wesentlichen Elemente dargestellt.

### Wege zur Ausführung der Erfindung

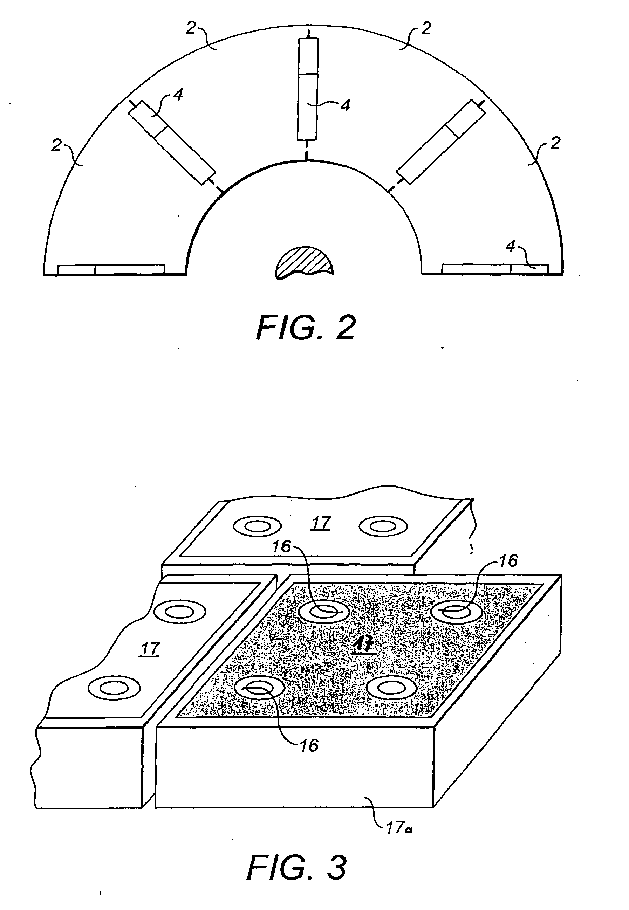

Figur 1 zeigt einen ausschnittsweise schematisch dargestellten Drehstromgenerator mit einer vorteilhaften Ausführungsform einer erfindungsgemäßer Abschirmung im Schnitt. Figur 2 zeigt eine Teilansicht in Pfeilrichtung A aus Figur 1.

Der schematisch in Figur 1 dargestellte Drehstromgenerator 1 weist einen Rotorkörper 8 auf, in welchem in nicht dargestellten Ausnehmungen Rotorwicklungen 7 angeordnet sind. Zudem weist der Drehstromgenerator 1 einen Stator 10 auf, welcher einen Statorkern 6 trägt. Der Rotor ist drehbar konzentrisch im Statorkern 6 angeordnet, welcher stirnseitig in Höhe des Wickelkopfes mit metallenen Pressplatten 3, z.B. aus Stahl oder Aluminium, abschliesst. Der Statorkern 6 ist in einem Gehäuse 5 aufgenommen.

Der Statorkern 6 trägt eine Statorwicklung 11. Die freien Enden der Statorwicklung 11, die sogenannten Wickelköpfe, sind über Stützen 4 gehalten, welche ihrerseits auf der Pressplatte 3 befestigt sind. Wie aus der Darstellung in Figur 2 zu entnehmen ist sind acht Stützen 4 ausgebildet und jeweils um 45° versetzt über die Kreisringfläche angeordnet. Zwischen den Stützen 4 erstrecken sich die erfindungsgemässen Abschirmungen 2 über den Pressplatten 3. Die Abschirmungen 2 sind dabei als dreidimensionale Module aufgebaut, welche die Pressplatten 3 oben und unten umgreifen, wie aus der Schnittdarstellung in Figur 1 erkennbar ist. Die Abschirmungen 2 sind aus einem isotropen weichmagnetischen Verbundmaterial, im vorliegenden Ausführungsbeispiel aus Somaloy 500 gepresst und anschliessend bei 500°C getempert. Eine Nachbearbeitung der Abschirmungsmodule ist bei dieser Art der Herstellung nicht erforderlich. Die Abschirmung 2 weist eine durchschnittliche Wandstärke von etwa 5 - 10 cm auf.

Generell können die Abschirmungen 2 in Ausnehmungen der stirnseitigen Pressplatten 3 eingefügt oder radial über, radial unter oder axial vor den stirnseitigen Pressplatten 3 angeordnet werden.

Figur 1a zeigt eine abgewandelte Ausführungsform eines Drehstromgenerators 1 mit erfindungsgemäßen Abschirmungen 2, 12 und 13 im Schnitt. Gegenüber der in Figur 1 gezeigten Ausführungsform weist diese Variante zur Versteifung des Gehäuses 5 zusätzliche Längsrippen 14 und nicht dargestellte, zusätzliche Querrippen auf. Im Stirnbereich des Stators sind hier neben der Abschirmung 2 noch eine Rippenabschirmung 12 an einer Querrippe und eine Zylindermantelabschirmung 13 vorhanden.

Durch die Zwischenräume 15, die zwischen den einzelnen Abschirmungen 2, 12, 12a, 13 vorgesehen sind, lässt sich das Magnetfeld 9 in begrenztem Rahmen einstellen.

Figuren 3 und 4 zeigen eine Plattenausgestaltung der Abschirmung in einer ausschnittsweise perspektivischen Ansicht bzw. in einem schematischen Schnitt durch eine Verbundplatte 17. Die Verbundplatten 17 sind dabei im wesentlichen rechteckförmig aufgebaut und weisen im vorliegenden Ausführungsbeispiel einen Rahmen 17a und vier senkrechte Hülsen 16 zur Aufnahme von Gewindestiften 18 auf. Der Rahmen 17a die Hülsen 16 und die Gewindestifte 18 sind dabei aus faserverstärktem Kunststoff und/oder aus unmagnetischem Stahl hergestellt.

Die Gewindestifte 18 werden durch die Hülsen 16 hindurchgesteckt und in die Pressplatten 3 geschraubt. Dann werden die Verbundplatten 17 durch Muttern 19, die auf die aus den Hülsen 16 hervorstehenden Gewindestifte 18 aufgeschraubt werden, an den Pressplatten 3 befestigt. Hierdurch wirken keine mechanischen Kräfte auf die empfindlichen Verbundplatten 17. Ein derartiger kachelförmiger Aufbau ist im Schnitt in Figur 4 dargestellt.

Zwischen den Verbundplatten 17 sind Luftspalte 20 vorhanden. Die Plattenstruktur mit magnetischen tangentialen und radialen Luftspalten 20 kann auch dazu dienen, den aufgesaugten Fluss im Betrag zu kontrollieren. Die Spalte können bei Bedarf auch mit einem Kühlmedium durchströmt werden (Pfeile in Fig. 4).

Die in Figuren 3 und 4 mit Rechteckplatten gezeigte Abschirmung kann alternativ auch durch wabenförmige Module gebildet werden. Die wabenförmigen Module sind dann ebenfalls aus Verbundmaterial hergestellt und können in ähnlicher Weise an den Pressplatten befestigt werden.

Die dargestellte vorteilhafte Ausführungsform einer erfindungsgemässen Abschirmung bewirkt ein gegenüber dem Stand der Technik verbessertes Magnetfeld im Bereich der Pressplatten, was durch die dargestellten Magnetfeldlinien 9 verdeutlicht wird. Aufgrund der durch die Vermeidung von Wirbelströmen in der Pressplatte und in der Gehäusewand erreichten Flussabsaugung werden die Zusatzverluste deutlich verringert und Wärmestaus verhindert.

### Bezugszeichenliste

- 1: Drehstromgenerator
- 2: Abschirmung
- 3: Pressplatte
- 4: Stütze
- 5: Gehäuse
- 6: Statorkern
- 7: Rotorwicklung
- 8: Rotorkörper
- 9: Magnetfeldlinie
- 10: Stator
- 11: Statorwicklung
- 12: Abschirmung
- 12a: Abschirmung
- 13: Zylindermantelabschirmung
- 14: Längsrippe
- 15: Zwischenraum
- 16: Hülse
- 17: Verbundplatte
- 17a: Rahmen
- 18: Gewindestift
- 19: Mutter
- 20: Luftspalt

## Patentansprüche

1. Drehstromgenerator mit einem Gehäuse (5), einem einen Statorkern (6) mit einer Statorwicklung (11) aufweisenden Stator (10), wobei stirnseitig am Statorkern (6) zumindest eine Pressplatte (3) angeordnet ist und einer Abschirmung (2) aus einem magnetisch permeablen Verbund-Material, **dadurch gekennzeichnet, dass** die Abschirmung (2) aus dreidimensional geformten Modulen eines Verbundmaterials aus magnetisch permeablen, von einer Isolierschicht umschlossenen Verbund-Partikeln gebildet ist, die in Ausnehmungen der zumindest einen stirnseitigen Pressplatte (3) eingefügt sind oder radial über, radial unter oder axial vor der zumindest einen stirnseitigen Pressplatte (3) angeordnet sind.

2. Drehstromgenerator nach Anspruch 1, **dadurch gekennzeichnet, dass** die Abschirmung (2) auf wicklungsnahe Bereiche des Gehäuses (5) aufgebracht ist.

3. Drehstromgenerator nach Anspruch 2, **dadurch gekennzeichnet, dass** die Isolierschicht der Verbund-Partikel eine Dicke von wenigen Mikrometern, vorzugsweise 20 µm bis 40 µm aufweist.

4. Drehstromgenerator nach einem der Ansprüche 1 bis 3, **dadurch gekennzeichnet, dass** die Abschirmung (2) ein Trägermaterial aufweist, in welchem die Verbund-Partikel aufgenommen sind.

5. Drehstromgenerator nach Anspruch 4, **dadurch gekennzeichnet, dass** die Abschirmung (2) einen kachel- oder wabenförmigen Aufbau aufweist.

6. Drehstromgenerator nach einem der vorhergehenden Ansprüche, **dadurch gekennzeichnet, dass** die Abschirmung (2) als Schicht-Konstruktion aus Verbund-Partikeln und hoch leitfähigem Material hergestellt ist, wobei die Schicht der Verbund-Partikel der Statorwicklung (11) zugewandt ist.

7. Drehstromgenerator nach Anspruch 6, **dadurch gekennzeichnet, dass** als hoch leitfähiges Material Kupfer vorgesehen ist, auf welches die Verbund-Partikel gesintert oder galvanisch aufgebracht sind.

8. Drehstromgenerator nach einem der vorhergehenden Ansprüche, **dadurch gekennzeichnet, dass** die Pressplatten (3) vollständig durch eine Abschirmung aus Verbund-Partikeln ersetzt sind.

## Claims

1. Three-phase generator having a housing (5) and having a stator (10) which has a stator core (6) with a stator winding (11), wherein at least one pressure plate (3) is arranged at the end on the stator core (6), and having a screen (2) composed of a magnetically permeable composite material, **characterized in that** the screen (2) is composed of three-dimensionally shaped modules of a composite material composed of magnetically permeable composite particles, which are surrounded by an insulating layer, which modules are inserted into recesses in the at least one end pressure plate (3), or are arranged radially above, radially below or axially in front of the at least one end pressure plate (3).

2. Three-phase generator according to Claim 1, **characterized in that** the screen (2) is fitted to areas close to the winding of the housing (5).

3. Three-phase generator according to Claim 2, **characterized in that** the insulating layer of the composite particles has a thickness of a few micrometers, preferably 20 µm to 40 µm.

4. Three-phase generator according to one of Claims 1 to 3, **characterized in that** the screen (2) has a carrier material in which the composite particles are held.

5. Three-phase generator according to Claim 4, **characterized in that** the screen (2) is in the form of tiles or a honeycomb.

6. Three-phase generator according to one of the preceding claims, **characterized in that** the screen (2) is produced as a layer structure composed of composite particles and highly conductive material, with the layer of the composite particles facing the stator winding (11).

7. Three-phase generator according to Claim 6, **characterized in that** copper is preferably provided as the highly conductive material, to which the composite particles are sintered or applied electrochemically.

8. Three-phase generator according to one of the preceding claims, **characterized in that** the pressure plates (3) are completely replaced by a screen composed of composite particles.

## Revendications

1. Générateur de courants tournants doté d'un boîtier (5), d'un stator (10) qui présente un noyau (6) de stator doté d'un enroulement (11) de stator, au moins une plaque de poussée (3) étant disposée frontalement sur le noyau (6) de stator, et d'un blindage (2) en un matériau composite magnétiquement perméable,
**caractérisé en ce que**
le blindage (2) est formé de modules d'un matériau composite constitué de particules composites magnétiquement perméables entourées par une couche isolante et
**en ce que** les modules sont insérés dans des découpes de la ou des plaques frontales de poussée (3) ou sont disposés radialement au-dessus, radialement en dessous ou axialement devant la ou les plaques frontales de poussée (3).

2. Générateur de courants tournants selon la revendication 1, **caractérisé en ce que** le blindage (2) est appliqué sur les parties du boîtier (5) proches de l'enroulement.

3. Générateur de courants tournants selon la revendication 2, **caractérisé en ce que** la couche isolante des particules composites a une épaisseur de quelques micromètres et de préférence de 20 µm à 40 µm.

4. Générateur de courants tournants selon l'une des revendications 1 à 3, **caractérisé en ce que** le blindage (2) présente un matériau de support dans lequel les particules composites sont logées.

5. Générateur de courants tournants selon la revendication 4, **caractérisé en ce que** le blindage (2) présente une structure en carreaux ou en nid d'abeilles.

6. Générateur de courants tournants selon l'une des revendications précédentes, **caractérisé en ce que** le blindage (2) est réalisé sous la forme d'une structure stratifiée constituée de particules composites et d'un matériau hautement conducteur, la couche de particules composites étant tournée vers l'enroulement (11) de stator.

7. Générateur de courants tournants selon la revendication 6, **caractérisé en ce que** comme matériau hautement conducteur est prévu du cuivre sur lequel les particules composites sont appliquées par frittage ou galvaniquement.

8. Générateur de courants tournants selon l'une des revendications précédentes, **caractérisé en ce que** les plaques de poussée (3) sont remplacées complètement par un blindage en particules composites.
